# EUROPEAN PATENT SPECIFICATION

(11) **EP 1 782 700 B1**
(45) Date of publication and mention of the grant of the patent: **04.03.2009**
(21) Application number: 05425767.0
(22) Date of filing: 02.11.2005
(51) Int. Cl.: A23L 1/182, A23L 1/18, A23L 1/10

(54) **Process for the production of chewable cereals kernels**
Verfahren zur Herstellung von kaubaren Getreidekörnern
Procédé de fabrication de grains de céréales masticables

(43) Date of publication of application: 09.05.2007
(73) Proprietor: Barilla G. e R. Fratelli S.p.A., 43100 Parma (IT)
(72) Inventor: Flavio, Codovilli Barilla G. e R. Fratelli S.p.A., 43100 Parma (IT); Luca, Guasina Barilla G. e R. Fratelli S.p.A., 43100 Parma (IT); Buriani, Ernesto c/o Barilla G. e R. Fratelli S.p.A., 43100 Parma (IT)
(74) Representative: Ferreccio, Rinaldo

(56) References cited:
- WO-A-97/41737
- GB-A- 2 069 812
- GB-A- 2 182 234
- US-A- 3 694 220
- US-A- 5 132 133
- DATABASE WPI Section Ch, Week 199415 Derwent Publications Ltd., London, GB; Class D13, AN 1994-124654 XP002372936 & RU 2 004 969 C1 (TYUROV E P) 30 December 1993 (1993-12-30)
- DATABASE WPI Section PQ, Week 199424 Derwent Publications Ltd., London, GB; Class P41, AN 1994-198267 XP002372937 & SU 1 806 009 A3 (GRAIN PRODUCTS RES INST) 30 March 1993 (1993-03-30)

## Description

### Field of application

The present invention generally relates to the technical field of the food industry. In particular, the invention regards a process for the treatment of cereals aimed at obtaining cereal kernels of such consistency as to be chewable.

### Prior art

It is known that cereals such as grain, rye, barley, rice, amaranth, millet, spelt, etc. constitute a rich source of nutritional substances (in particular, essential amino acids, minerals, vitamins, fibres) that are necessary in both the human and the animal diet. In the native form, however, they are not edible since they are not chewable and they remain poorly digestible and available.

In order to render them chewable and digestible, as well as to confer them with a more appealing appearance or taste, traditional treatments, such as milling, expansion, flaking, extrusion, steam parboiling, wetting or combinations thereof, depending on their chosen use, have long been known.

Such treatments enable to obtain cereals which are apt, for example, for cooking, for the preparation of doughs for breads, sweets, biscuits and crackers, for the incorporation into soups, for use as breakfast cereals, etc.

Some of the known processes comprise a step of exposure of the cereals to infrared light, which causes heating inside the kernel, with consequent partial cooking.

Patent US 5 132 133 describes a process for the production of a cereal-based snack comprising the initial step of treating whole kernels with near IR (or SWIR) with consequent partial cooking, followed by a (at least partial) starch gelling step by means of treatment with water.

Patent RU 2085088 describes a process for treating caryopses comprising a treatment step with IR rays of unspecified wavelength and a subsequent treatment step with an electromagnetic field of ultra-high frequency, thus obtaining exploded kernels.

Patent US 3 694 220 describes a process for producing ready-to-eat seeds (of cereals or legumes) by means of a brief treatment with IR rays of wavelength comprised between 2.5 and 3.0 µm, followed by a flaking step.

Patent DE 37 42 261 describes a process for reducing the cooking time of wholemeal rice comprising a treatment step of the kernels with IR rays of wavelength shorter than 10 µm. The wholemeal rice thus treated has a subsequent cooking time of only 15 minutes. Nothing is specified with regards to the chewability of the irradiated kernels.

WO 97/41737, to Kellogg Company discloses a process for reconstituting a stable grain product. In the invention, a stable, at least partially cooked grain, having a water activity of no more than 0.65 is exposed to thermal energy whereby the surface of the grain is at the temperature of from about 140 to 200 °F (60-93.3 °C). The grain is then milled, flaked or puffed.

Patent application GB 2 182 234 discloses a method of roasting oil-bearing seeds such as cocoa, coffee, cereals, and the like which comprises exposing the material to be roasted to infrared radiation of wavelength in the range of 1.5 to 2.7 microns for 60 to 900 seconds.

RU 2 004 969 discloses a method of treatment of raw materials with IR radiation in three stages: (a) 0.96-1 microns at 28-30 kW/m² for 10-15 seconds, (b) 1.4-1.6 microns at 28-30 kW/m² for 30-40 seconds; and (c) 3.40-3.46 microns at 6-8 kW/m² for 50-60 seconds. The product is then remoistened and cooled.

SU 1 806 009 discloses a method of preparing buckwheat groats by cleaning the grain mass, humidifying the grain, drying, husking and kernel separation. The drying step consists of two stages where the kernels are subjected to infra-red radiation having a wavelength of 0.4-1.2 microns and beam density of 20-25 kW/m² for 30-40 seconds.

UK patent application GB 2 069 812 describes a process for manufacturing a foodstuff product, which comprises partly softening rice to prevent it from shattering under pressure, applying pressure to the partly softened rice, applying an additive to the rice, impregnating the rice with the additive through cracks ar fissure, and heating the resultant rice product so cause puffing of the product.

Nevertheless, such treatments cause considerable alterations in the organoleptic qualities, and sometimes in the nutritional properties, of the starting cereal, or they are not sufficient, alone, to make the cereal ready for consumption.

The problem at the basis of the present invention was therefore that of providing a process for the treatment of cereals with the object of making them chewable, digestible and ready-to-eat as such, without causing substantial alterations to the organoleptic and nutritional characteristics of the starting cereal.

### Summary of the invention

A similar problem has been solved, according to the invention, by a process for the treatment of cereal kernels to make them chewable, characterised in that it consists solely of the exposure of raw cereal kernels to short infrared rays of wavelength comprised between 0.7 and 1.2 µm, having a power density comprised between 50 and 100 kW/m², for a time comprised between 15 and 60 seconds.

Preferably, the aforementioned cereal kernels are selected from the group consisting of rice, buckwheat barley and amaranth.

Preferably, the time of irradiation is approximately 30 seconds.

Preferably, the cereal kernels are conveyed to the IR ray treatment zone in a monolayer on a conveyor belt.

The process according to the present invention has the advantage of not requiring pre-treatments and of giving rise to a product which maintains substantially unaltered the organoleptic and nutritional properties, as well as the appearance, of the starting cereal kernel.

Indeed, the IR rays cause a partial cooking of the cereal kernel, which slightly expands following sudden evaporation, creating a homogenous alveolation in which the single alveoli are rather small. The relative humidity drops from approximately 7-10% to approximately 3% and the mastication strength, measured as the shear force, drops from 120 N to values of 25 N or lower. The kernel is crunchy and slightly toasted.

The final product, therefore, will not contain additives, preservatives or other additional ingredients, and will hence be a genuine and natural food, obtained through a process comparable with conventional processes from the standpoint of energy consumption.

The cereals treated according to the procedure of the present invention are employed in many applications, for example for the incorporation into snack bars or in muesli, as ingredients in bakery products such as rusks, biscuits and bread, or added to ready-made and frozen foods.

### Brief description of the figures

Figure 1 is an electron microscope photograph showing a section of a buckwheat caryopsis prior to the treatment by the process according to the present invention.
Figure 2 is an electron microscope photograph showing a section of a buckwheat caryopsis after having been subjected to the process according to the present invention.
Figure 3 is an electron microscope photograph showing a section of a non-treated rice caryopsis.
Figure 4 is electron microscope photograph showing a section of a rice caryopsis treated according to the process of the present invention.

### Detailed description of the invention

The present invention will be further described by reference to some illustrative and non-limiting embodiment examples provided here below.

### EXAMPLE 1

### Buckwheat

Previously cleaned and selected buckwheat kernels were deposited in a monolayer on a conveyor belt covered by a sheet of aluminium foil at a density of 1.3 kg/m². The conveyor belt, placed at a distance of 15 cm from an IR ray source (having wavelength of 1.0 µm), was run at a speed of 0.6 m/min. The IR ray source consisted of lamps having an electric power of 21 kW on a radiating surface of 0.296 m². The cooking time was 30 seconds. The productivity was 20 kg/h.

The kernels thus treated presented a limited expansion with respect to the starting kernels, as well as optimal chewability. The characteristics of humidity, density and chewability (or shear force) before and after the treatment are summarised in Table 1, below.

**Table 1: Humidity, density and shear force values for buckwheat caryopses before and after treatment.**

| | Humidity (%) | Density (kg/L) | Shear Force (N) |
|---|---|---|---|
| As such | 9.9 | 0.75 | 24.5 |
| Treated | 2.5 | 0.38 | 11.7 |

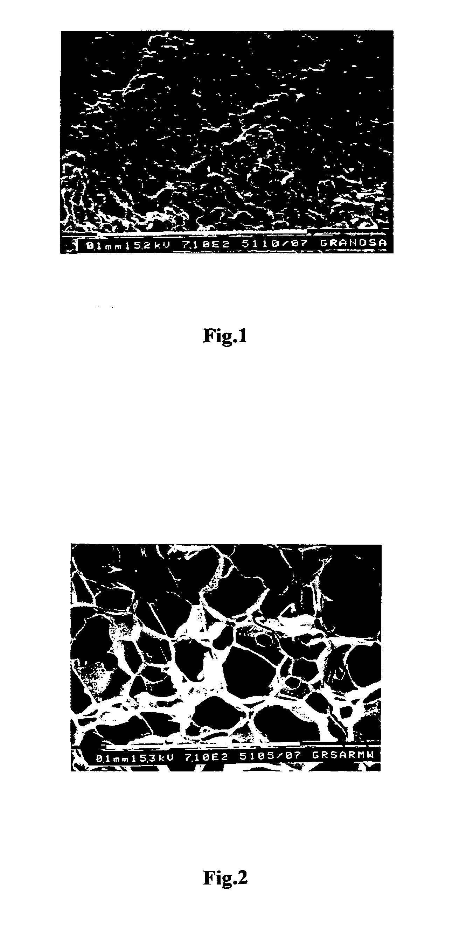

Furthermore, the treated kernel was crunchy, slightly toasted, with a regular alveolation (see figures 1 and 2), not dissimilar to the non-treated kernel in terms of appearance and size.

From the organoleptic standpoint, it had a slightly toasted taste and a pleasant chewability while from the nutritional standpoint it maintained the characteristics of the starting caryopsis.

### EXAMPLE 2

### Rice

Previously cleaned and selected rice kernels were deposited in a monolayer on a conveyor belt covered by a sheet of aluminium foil at a density of 1.3 kg/ m². The conveyor belt, placed at a distance of 15 cm from an IR ray source (having wavelength of 1.0 µm), was run at a speed of 0.6 m/min. The IR ray source consisted of lamps having an electric power of 21 kW on a radiating surface of 0.296 m². The cooking time was 30 seconds. The productivity was 20 kg/h.

The kernels thus treated presented a limited expansion with respect to the original kernels, as well as optimal chewability. The characteristics of humidity, density and chewability (or shear force) before and after the treatment are summarised in Table 2, below.

**Table 2: Humidity, density and shear force values for rice caryopses before and after treatment.**

| | Humidity (%) | Density (kg/L) | Shear Force (N) |
|---|---|---|---|
| As such | 13.4 | 0.9 | 95 |
| Treated | 1.4 | 0.2 | 9.4 |

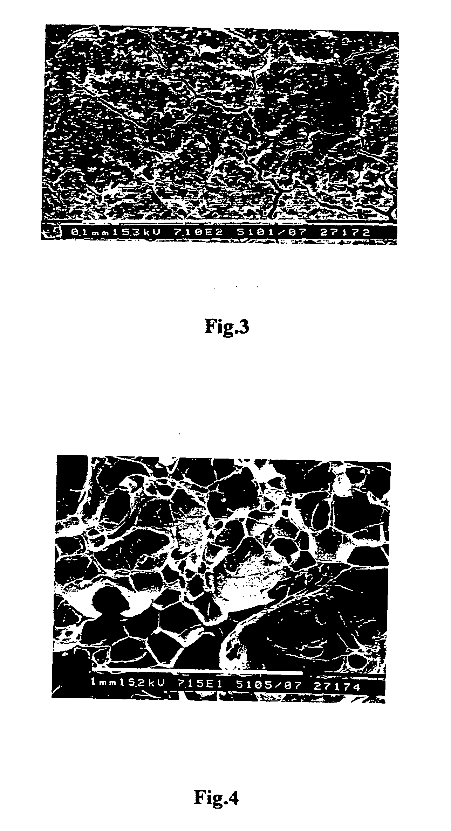

Furthermore, the treated kernel was crunchy, slightly toasted, with a regular alveolation (see figures 3 and 4), not dissimilar to the non-treated kernel in terms of appearance and size. Furthermore, from the nutritional standpoint, it maintained the same characteristics of the starting product.

### EXAMPLE 3

### Amaranth

Previously cleaned and selected amaranth kernels were deposited in a monolayer on a conveyor belt covered by a sheet of aluminium foil at a density of 0.7 kg/m². The conveyor belt, placed at a distance of 15 cm from an IR ray source of (having wavelength of 1.0 µm), was run at a speed of 1 m/min. The IR ray source consisted of lamps having an electric power of 21 kW on a radiating surface of 0.296 m². The cooking time was 20 seconds. The productivity was 8 kg/h.

The kernels thus treated presented a limited expansion with respect to the starting kernels, as well as optimal chewability. The characteristics of humidity, density and chewability (or shear force) before and after the treatment are summarised in Table 3, below.

**Table 3: Humidity, density and shear force values for amaranth caryopses before and after treatment.**

| | Humidity (%) | Density (kg/L) |
|---|---|---|
| As such | 12.7 | 0.91 |
| Treated | 1.7 | 0.15 |

Furthermore, the treated kernel was crunchy, slightly toasted, with a regular alveolation of size similar to that of the non-treated kernel and perfectly chewable.

From the nutritional standpoint, moreover, it maintained the same characteristics of the starting product.

### EXAMPLE 4

### Hulled Barley

Previously cleaned and selected hulled barley kernels were deposited in a monolayer on a conveyor belt covered by a sheet of aluminium foil at a density of 1.3 kg/ m². The conveyor belt, placed at a distance of 15 cm from an IR ray source of (having wavelength of 1.0 µm), was run at a speed of 0.6 m/min. The IR ray source consisted of lamps having an electric power of 21 kW on a radiating surface of 0.296 m². The cooking time was 30 seconds. The productivity was 15 kg/h.

The kernels thus treated presented a limited expansion with respect to the starting kernels, as well as optimal chewability. The characteristics of humidity, density and chewability (or shear force) before and after the treatment are summarised in Table 4, below.

**Table 4: Humidity, density and shear force values for hulled barley caryopses before and after treatment.**

| | Humidity (%) | Density (kg/L) | Shear Force (N) |
|---|---|---|---|
| As such | 9.7 | 0.8 | 123.5 |
| Treated | 2.3 | 0.3 | 20.2 |

Furthermore, the treated kernel was crunchy, slightly toasted, with a regular alveolation, not dissimilar to the non-treated kernel for appearance and size.

From the nutritional standpoint, moreover, it maintained the same characteristics of the original product.

## Claims

1. Process for the treatment of non-treated cereal kernels to make them chewable, **characterised in that** it consists of the exposure of said non-treated cereals to short infrared rays of wavelength comprised between 0.7 and 1.2 µm and having a power density comprised between 50 and 100 kW/m² for a time comprised between 15 and 60 seconds.

2. Process according to claim 1, wherein said cereals are chosen from the group consisting of rice, buckwheat, barley and amaranth.

3. Process according to any one of the preceding claims, wherein the exposure time to the infrared rays is approximately 30 seconds.

4. Process according to any one of the preceding claims, wherein said cereals are substantially arranged in a monolayer.

5. Process according to claim 4, wherein said cereals are conveyed on a conveyor belt to a treatment zone with infrared rays.

6. Cereal kernels treated by means of the process according to any of the preceding claims, **characterised in that** they halve a humidity comprised between 1 and 4%, a density comprised between 0.1 and 0.5 kg/L and a shear force comprised between 5 and 25 N.

7. Use of cereal kernels according to claim 6 for the production of products of the type of snack bars, muesli, or breakfast cereals, soups or broths, breads, biscuits, rusks or the like.

8. Baked product containing cereal kernels according to claim 6.

9. Food composition containing cereal kernels according to claim 6.

## Patentansprüche

1. Verfahren zur Behandlung von unbehandelten Getreidekörnern, um sie kaubar zu machen, **dadurch gekennzeichnet, dass** es aus der Bestrahlung des unbehandelten Getreides mit kurzwelligen Infrarotstrahlen besteht, die eine Wellenlänge zwischen 0,7 und 1,2 µm umfassen und eine Leistungsdichte haben, die zwischen 50 und 100 kW/m² umfasst, für eine Zeit, die zwischen 15 und 60 Sekunden umfasst.

2. Verfahren gemäß Anspruch 1, wobei das Getreide aus der Gruppe ausgewählt worden ist, die aus Reis, Buchweizen, Gerste und Amarant besteht.

3. Verfahren gemäß einem der vorhergehenden Ansprüche, wobei die Bestrahlungszeit mit Infrarotstrahlen ungefähr 30 Sekunden ist.

4. Verfahren gemäß einem der vorhergehenden Ansprüche, wobei das Getreide im Wesentlichen einschichtig angeordnet ist.

5. Verfahren gemäß Anspruch 4, wobei das Getreide auf einem Förderband zu einem Behandlungsbereich mit Infrarotstrahlen befördert wird.

6. Getreidekörner, die mittels des Verfahrens gemäß einem der vorhergehenden Ansprüche behandelt worden sind, **dadurch gekennzeichnet, dass** sie eine Feuchtigkeit aufweisen, die zwischen 1 und 4 % umfasst, eine Dichte, die zwischen 0,1 und 0,5 kg/l umfasst und eine Scherkraft, die zwischen 5 und 25 N umfasst.

7. Verwendung von Getreidekörnern gemäß Anspruch 6 für die Herstellung von Erzeugnissen in der Art von Snackriegeln, Müsli oder Frühstücksflocken, Suppen oder Brühen, Broten, Biskuits, Zwieback oder Ähnlichem.

8. Gebackenes Erzeugnis, das die Getreidekörner gemäß Anspruch 6 enthält.

9. Essenszusammensetzung, die die Getreidekörner gemäß Anspruch 6 enthält.

## Revendications

1. Procédé de traitement de grains de céréales non traités, afin qu'ils puissent être mâchés, **caractérisé en ce qu'**il consiste à exposer lesdites céréales non traitées à des rayons infrarouges courts d'une longueur d'onde comprise entre 0,7 et 1,2 µm et ayant une densité de puissance comprise entre 50 et 100kw/m², pendant une durée comprise entre 15 et 60 secondes.

2. Procédé selon la revendication 1, selon lequel lesdites céréales sont choisies dans le groupe constitué du riz, du sarrasin, de l'orge et de l'amaranth.

3. Procédé selon l'une quelconque des revendications précédentes, selon lequel la durée d'exposition aux rayons infrarouges est d'environ 30 secondes.

4. Procédé selon l'une quelconque des revendications précédentes, selon lequel lesdites céréales sont disposées pour l'essentiel en une monocouche.

5. Procédé selon la revendication 4, selon lequel lesdites céréales sont transportées sur une bande transporteuse jusqu'à une zone de traitement par rayons infrarouges.

6. Grains de céréales traités au moyen du procédé selon l'une quelconque des revendications précédentes, **caractérisés en ce qu'**ils possèdent une humidité comprise entre 1 et 4%, une densité comprise entre 0,1 et 0,5 kg/L, et une force de cisaillement comprise entre 5 et 25 N.

7. Utilisation de grains de céréales selon la revendication 6 pour la production de produits du type barres à grignoter, muesli, céréales prêtes à consommer, soupes ou bouillons, pains, biscuits, biscottes ou analogues.

8. Produit de boulangerie ou pâtisserie contenant des grains de céréales selon la revendication 6.

9. Composition alimentaire contenant des grains de céréales selon la revendication 6.
